# EUROPÄISCHE PATENTSCHRIFT

(11) **EP 1 104 180 B1**
(45) Veröffentlichungstag und Bekanntmachung des Hinweises auf die Patenterteilung: **19.01.2011**
(21) Anmeldenummer: 00125552.0
(22) Anmeldetag: 22.11.2000
(51) Int. Cl.: H04N 5/21, H04N 17/04

(54) **Verfahren und Einrichtung zur Bestimmung und mindestens teilweisen Korrektur der Fehler eines Bildwiedergabesystems**
Method and device for determining and at least partially correcting of errors in an image reproducing system
Procédé et dispositif pour déterminer et corriger au moins partiellement les erreurs dans un système de reproduction d'images

(30) Priorität: 26.11.1999 DE 19956842; 05.05.2000 DE 10022009
(43) Veröffentlichungstag der Anmeldung: 30.05.2001
(73) Patentinhaber: INB Vision AG, 39120 Magdeburg (DE)
(72) Erfinder: Michaelis, Bernd, Prof. Dr.-Ing., 39175 Biederitz (DE); Krell, Gerald, Dr., 39128 Magdeburg (DE); Daniel, Florian, 39104 Magdeburg (DE)
(74) Vertreter: Leinung, Günter

(56) Entgegenhaltungen:
- DE-A- 19 726 877
- US-A- 5 231 481

## Beschreibung

Die Erfindung betrifft ein Verfahren und eine Einrichtung zur Bestimmmung und mindestens teilweisen Korrektur der Fehler eines Bildwiedergabesystems. Die Erfindung ist besonders geeignet für die Korrektur der Bildwiedergabe auf einem Bild- bzw. Projektionsschirm, wie sie z. B. bei Fernsehern, Monitoren, Displays oder Projektoren auf Basis von z. B. Röhren-, Plasma-, LCD- oder Mikrospiegel-Technik erfolgt, aber in angepaßter Form auch einsetzbar in der Röntgenbildtechnik sowie für digitale Kopierer, Scanner, Bildwandler u. dgl.

Das Verfahren korrigiert typische Fehler, die bei der Bildwiedergabe auftreten, hervorgerufen durch Unschärfen, Verzerrungen und eine ungleichmäßige Ausleuchtung sowie Farb- und Konvergenzfehler. Dadurch werden die Anforderungen an die mechanischen, optischen und elektronischen Teile wie Strahlenkanonen, LCD-Paneele und Projektionsobjektive sowie deren exakten Justagen minimiert. Aber auch Unzulänglichkeiten des Projektions- bzw. Bildschirms sowie Verzerrungen durch Schrägprojektion (Keystone-Verzerrung) können korrigiert werden.

Das Anwendungsgebiet der Erfindung ist jedoch nicht ausschließlich auf die Fehlerkorrektur beschränkt, d. h. auf die Verringerung bzw. Beseitigung unerwünschter Änderungen der Bilddaten, die durch ein reales Bildwiedergabesystem im Vergleich zu einem idealen System verursacht werden. Grundsätzlich ist die Erfindung auch in Verbindung mit solchen Systemen einsetzbar, in denen die zur Visualisierung bzw. Wiedergabe vorgesehenen Bilddaten vor ihrer Eingabe in das Bildwiedergabesystem einer Transformationen unterzogen werden sollen, die durch Vorgabe des Ergebnisses der Transformation von Ausgangsbilddaten in transformierte Bilddaten, z. B. anhand von Musterbildern definierbar ist.

Die Bezeichnung "Bildwiedergabesystem" soll daher nachfolgend als Sammelbegriff für diese Systeme verwendet werden. Ferner sollen unter "digitalen" bzw. "digitalisierten" Bilddaten oder "digitalen Testbilddaten" nicht nur bereits primär vorliegende digitale Bilddaten verstanden werden, sondern auch solche, die mittels Digitalisierung von primär analogen Bilddaten erzeugt wurden.

Es ist bereits ein Video-Projektionsgerät bekannt (z. B. US-PS 5231481), das eine auf der Basis einer Rückkopplung arbeitende Korrektureinrichtung aufweist, mit der Fehler des projizierten Bildes korrigierbar sind, die z. B. durch optische oder elektrische Komponenten des Projektionsgerätes bedingt sind. Die Rückkopplung erfolgt über eine Kamera, die eine Aufnahme eines mittels des Video-Projektionsgerätes projizierten Testbildes erzeugt.

Die von der Videokamera aufgenommenen und gespeicherten Bilddaten des projizierten Testbildes werden mit den Bilddaten des zu projizierenden ursprünglichen Testbildes, das als fehlerfrei gilt, verglichen, um Korrektursignale zu berechnen und zu speichern. Mit diesen Korrektursignalen werden die Steuereinheiten des Projektionsgerätes angesteuert, um die Qualität des projizierten Bildes zu verbessern.

Ein anderes Verfahren (US-PS 5475447) betrifft die automatische Konvergenz- und Verzeichnungs-Korrektur eines von einem Videoprojektor auf eine von einem Rechteck eingerahmte Projektionsfläche projizierten Bildes. Es basiert auf einem Videoprojektor, der von einem Video-Signalgenerator angesteuert wird. Eine Kamera bildet die Projektionsfläche ab und erzeugt mittels eines Signalprozessors ein Videosignal, das in einem Bildspeicher gespeichert wird. Eine Rechnereinheit berechnet die Koordinaten der vier Eckpunkte der rechteckigen Projektionsfläche und ermittelt daraus die Position von Referenzpunkten innerhalb der Projektionsfläche. Ein Signalgenerator erzeugt ein Video-Signal mit Marken an Positionen, die den von der Rechnereinheit berechneten Positionen der Referenzpunkte entsprechen. Dieses Video-Signal steuert den Videoprojektor an, der ein Bild mit den Marken projiziert. Dieses Bild mit den Marken wird mittels der digitalen Kamera in einem Bildspeicher gespeichert. Aus der Abweichung zwischen den Positionen der im Bildspeicher gespeicherten Referenzpunkte und den Positionen der gespeicherten Marken wird ein Korrektursignal für die automatische Konvergenz- und Verzeichnungs-Korrektur des Videoprojektors abgeleitet.

Das Video-Projektionsgerät gemäß US-PS 5091773 weist ebenfalls eine auf der Basis einer negativen Rückkopplung arbeitende Korrektureinrichtung auf, um Fehler des projizierten Bildes zu korrigieren, die z. B. durch das optische System bedingt sind. Zu diesem Zweck wird ein Testbild, das aus im Raster angeordneten hellen Bildpunkten besteht, mittels des Projektionsgerätes auf eine Projektionsfläche abgebildet. Dieses auf der Projektionsfläche erzeugte Bild wird auf eine im wesentlichen opaque Filtermaske abgebildet, die nur an den Punkten transparent ist, in denen die Abbildung eines fehlerfrei projizierten Testbildes helle Bildpunkte aufweist. Aus dem Meßwert für die von der die Filtermaske hindurchgelassene Lichtintensität werden Korrektursignale ermittelt, mit denen das Video-Projektionsgerät angesteuert wird.

Den benannten Verfahren ist gemeinsam, daß aus dem von einer digitalen Kamera gespeicherten Testbild ein Korrektursignal zur Verbesserung der Bildqualität des projizierten Bildes berechnet wird, das den Bildgenerator des Projektionssystems ansteuert und dadurch z. B. Verzeichnungs- oder Konvergenzfehler kompensiert.

Die Berechnung der Korrekturwerte ist aufwendig und nur für die jeweils analysierten Bildpunkt-Orte gültig. Daher muß bei den Verfahren eine Interpolation für die dazwischen ' liegenden Positionen erfolgen, was aufwendig ist und nur eine Näherung darstellt. Es werden auch nur einzelne Fehler - hauptsächlich die Bildgeometrie - korrigiert, weitere Fehler im Übertragungsverhalten des Wiedergabesystems, wie die im Anspruch beschriebenen, bleiben unberücksichtigt. Bei den beschriebenen Verfahren muß zum Teil in die Ansteuerelektronik oder Mechanik bzw. Optik eingegriffen werden. Teilweise müssen auch Bild- bzw. Projektionsschirme verändert werden. Nachteilig ist auch, daß die Berechnung der Korrekturwerte bei jeder Wiederholung der Wiedergabe und für jedes benutzte Bildwiedergabesystem erneut vorgenommen werden muß.

Dies erscheint in den Fällen besonders nachteilig, bei denen ein Anwender mehrere gleichartige Bildwiedergabesysteme benutzt, von denen bekannt ist, daß sie im wesentlichen die gleichen Abbildungsfehler besitzen.

Der Erfindung liegt daher die Aufgabe zugrunde, ein Verfahren und eine zugehörige Einrichtung zu entwickeln, bei dem kein Eingriff in Elektronik, Mechanik oder Optik erforderlich ist, sondern ausschließlich die zu projizierenden Daten modifiziert werden und damit das gesamte Übertragungsverhalten des Wiedergabesystems berücksichtigt wird.

Erfindungsgemäß wird diese Aufgabe durch ein Verfahren gemäß Anspruch 1 sowie eine Einrichtung gemäß Anspruch 8 gelöst. Vorteilhafte Ausführungsformen der Erfindung und deren Vorteile ergeben sich unmittelbar aus den Unteransprüchen sowie den folgenden Angaben.

Der Grundgedanke des erfindungsgemäßen Verfahrens besteht darin, daß ein neuronales Netz als ortsabhängig arbeitendes Digitalfilter zur Vorkorrektur verwendet wird, wobei unter der Voraussetzung eines linearen Aussteuerungsverhaltens der Bildelemente ein einschichtiges neuronales Netz zum Einsatz kommt. Das neuronale Netz kann programmtechnisch auf einem Standardrechner oder als eine Schaltungsanordnung implementiert sein.

Als Lernmuster für das neuronale Netz dient das digitalisierte Bild einer vom Bildwiedergabesystem erzeugten unkorrigierten Abbildung des Testbildes, während die digital vorliegenden Bilddaten des Testbildes direkt die Lernvorgabe für den Anlernvorgang definieren.

Nach dem Lernvorgang werden die Eingänge des neuronalen Netzes durch das wiederzugebende Bild gebildet, und die Ausgänge bilden direkt die Pixeleingangswerte des Bildwiedergabesystems, das dann durch ein vorkorrigiertes Bild angesteuert wird.

Auf diese Weise werden die Fehler im Übertragungsverhalten von Bilderzeugung, Optik und Projektion für beliebige wiederzugebende Bilder von vornherein berücksichtigt und korrigiert, so daß die kompensierten Fehler auf dem Projektions- bzw. Bildschirm nicht mehr auftreten.

Der besondere Vorteil der Erfindung besteht demnach darin, daß kein Eingriff in Ablenkung und Intensitätsmodulation des Bildwiedergabesystems erfolgen muß oder Veränderungen am Bild- bzw. Projektionsschirm vorgenommen werden müssen.

Das System berücksichtigt mehrere Arten von Abbildungsfehlern gleichzeitig. Dabei handelt es sich um Bildverzerrungen und Unschärfen, die durch geometrische Verzeichnungen bzw. Defokussierung der Optik, durch Schiefprojektion (Keystone-Verzerrung) sowie durch Krümmungen der Projektionswand hervorgerufen werden. Auch eine ungleichmäßige Helligkeitsverteilung, die durch variierende Reflexionseigenschaften der Projektionswand und die Optik bzw. Lichterzeugung hervorgerufen werden, werden korrigiert. Bei der Farbbildprojektion werden Farbfehler, die an Farbübergängen auftreten (Farbsäume), korrigiert. Ein spezielles Verfahren sorgt dafür, daß die Farbbalance des Projektors für Flächen konstanter Farbe erhalten bleibt. Eine fehlerhafte Ausrichtung der Farbkanäle wird ebenfalls ausgeglichen (Konvergenzkorrektur).

Anwendungsbereiche liegen vor allem bei Anzeigeeinrichtungen zur Auf- und Rückprojektion mit Daten- und Videoprojektoren, bei Auflagedisplays für Overheadprojektoren sowie in der Fernseh- und Monitordisplaytechnik. Die Erfindung kann entweder zur Einrichtung von Systemen am Ort der Anwendung benutzt werden oder zum Abgleich in der Endfertigung von Geräten. Die Erfindung ist auch für Systeme zur Projektion von Stereobildern geeignet.

Die erfindungsgemäße Lösung wird nachfolgend anhand eines Ausführungsbeispieles näher erläutert. In der zugehörigen Zeichnung zeigt
- Fig. 1: eine Anordnung zur Durchführung des erfindungsgemäßen Verfahrens,
- Fig. 2.: eine schematische Darstellung des Anlernvorganges gemäß der Erfindung,
- Fig. 3: eine schematische Darstellung des Korrekturvorganges gemäß der Erfindung,
- Fig. 4 a: die prinzipielle Struktur des künstlichen neuronalen Netzes zur Vorkorrektur

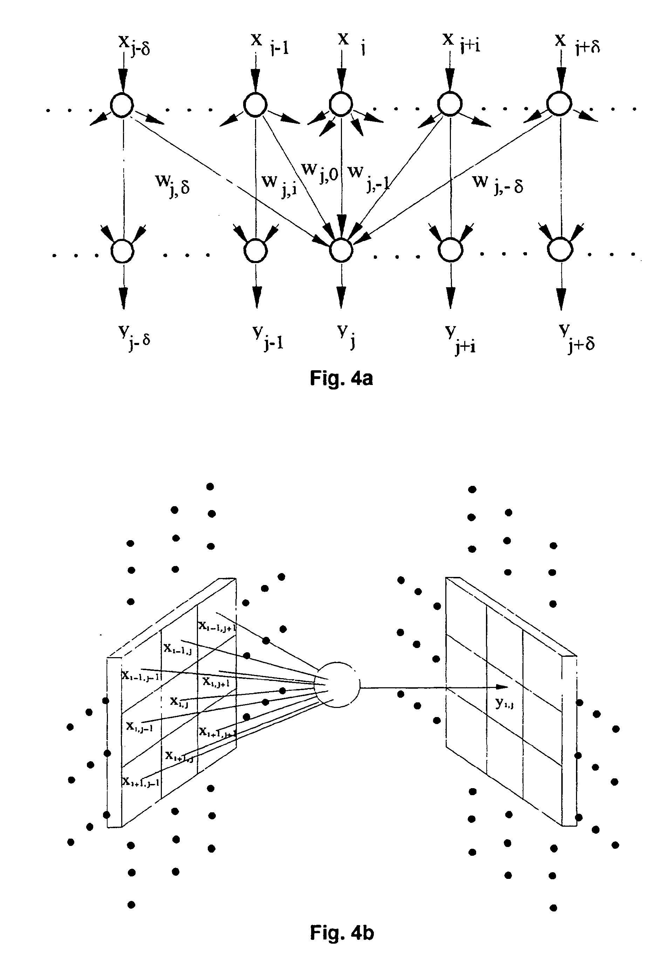

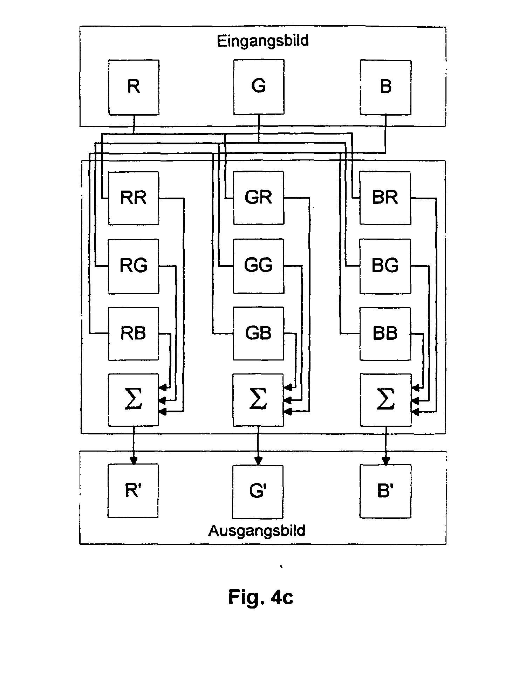

- Fig. 4 b: die flächie Verknüpfung an einm einzelnen Neuron
- Fig. 4 c: die Realisierung mit den Grundfarben RGB

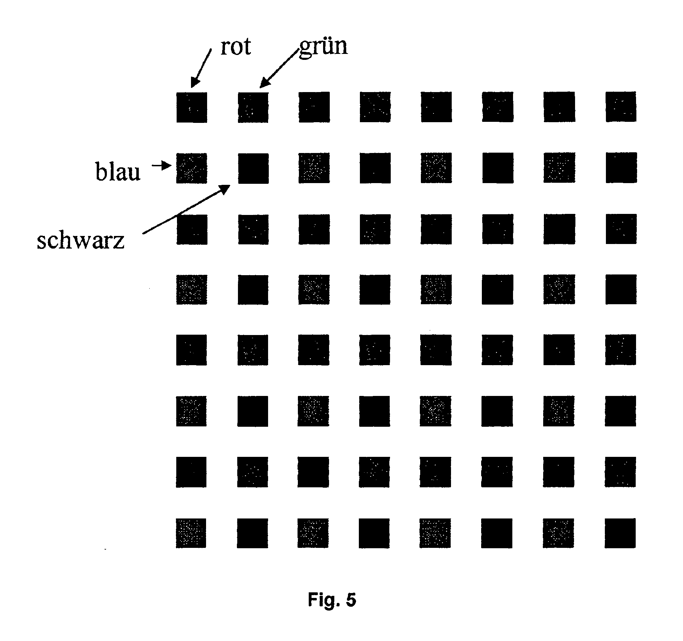

- Fig. 5: ein typisches Testbild zur Lerndatengewinnung.

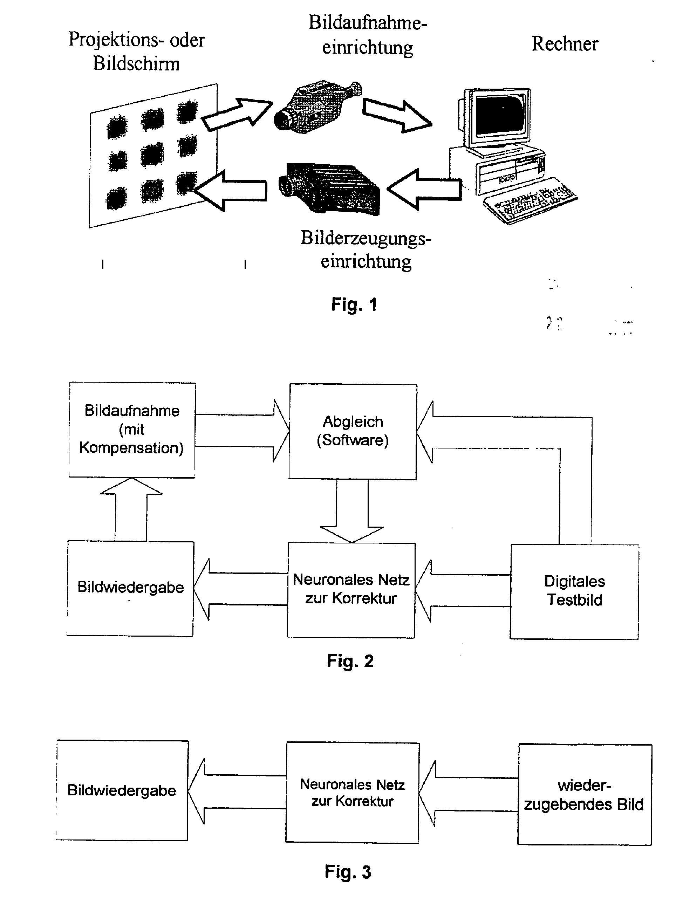

Die wiederzugebenden Bilder (Fig. 1) befinden sich in digitaler Form in einem Rechner, an den ein Bildwiedergabegerät geschaltet ist. Dadurch können die Bilder wie üblich auf einem Bildschirm bzw. einer Projektionsfläche sichtbar gemacht werden.

Das Verfahren verläuft in zwei Phasen - dem Lernvorgang (Abgleich) und dem laufenden Betrieb. Dabei wird zum Abgleich der Korrektur (Fig. 2) ein Bildaufzeichnungsgerät (z. B. eine elektronische Kamera) benutzt , um ein wiedergegebenes Testbild aufzunehmen, das wieder in den Rechner eingelesen wird. Um zusätzliche Fehler zu vermeiden, muß das Bildaufzeichnungsgerät eine höhere Bildqualität besitzen als die zu korrigierende Bildwiedergabe, oder störende Abbildungseigenschaften des Bildaufzeichnungsgeräts werden vor der weiteren Auswertung kompensiert.

Fig. 4 zeigt in vereinfachter schematischer Darstellung das künstliche neuronale Netz als ortsabhängig arbeitendes Digitalfilter, wie es für die Korrektur verwendet wird. Unter der Voraussetzung eines linearen Gesamtsystems kommt eine einschichtiges neuronales Netz nach Fig. 4a zum Einsatz (vereinfachend eindimensional und nur für einen Farbkanal dargestellt). Die Eingänge xⱼ sind beim Anlernvorgang die Pixelwerte des aufgenommenen Bildes, die über die Gewichte wᵢⱼ mit einander verknüpft werden. Im tatsächlichen zweidimensionalen Fall sind die Neuronen gleichfalls flächig mit den benachbarten verknüpft und nicht nur in einer Zeile, wie Fig. 4b am Beispiel eines Neurons zeigt. Bei N Farbkanälen sind N² neuronale Netze nach Fig. 4b erforderlich für eine umfassende Berücksichtigung der Fehler. Fig. 4c zeigt ein Beispiel für ein System mit den Grundfarben RGB. Jeder korrigierte Farbkanal R',G',B' ergibt sich demnach aus der Summe der Ausgänge der neuronalen Netze RR,RG,RB,BR,BB,BG,BR,BG,BB, die jeweils mit den Kanälen R,G und B gespeist werden.

Der Abgleich des Systems zur Korrektur erfolgt durch das Anlernen des künstlichen neuronalen Netzes mittels eines Rechners. Das aufgenommene Testbild, das die zu korrigierenden Fehler enthält, wird digital als Lernmuster abgespeichert und dient zur Lerndatengewinnung für das künstliche neuronale Netz. Da das Testbild fehlerfrei im Rechner vorliegt, definiert es direkt die Lernvorgabe für den Anlernvorgang.

Das Testbild kann einen relativ einfachen Aufbau haben (Fig. 5). Das künstliche neuronale Netz leitet durch Auswertung der Lerndaten im Zusammenhang mit der Lernvorgabe die erforderlichen Parameter des neuronalen Netzes für die Korrektur ab, indem durch Vergleich der Ausgänge des neuronalen Netzes yⱼ mit der Lernvorgabe die Gewichte des neuronalen Netzes wᵢⱼ bestimmt werden. Anders als bei der US-PS 5091773 gestattet der Anlernvorgang eine örtlich gleitende Ermittlung von Korrekturwerten, so daß keine Interpolation erforderlich ist.

Nach dem Lernvorgang werden die Eingänge des neuronalen Netzes durch das wiederzugebende Bild gebildet, und die Ausgänge bilden direkt die Pixeleingangswerte der Bildwiedergabeeinrichtung, die dann durch ein vorkorrigiertes Bild angesteuert wird. Die Umsetzung des einmal abgeglichenen Korrektursystems kann programmtechnisch auf einem Standardrechner oder durch eine spezielle Hardwarelösung erfolgen. Im Unterschied zu EP 934653 muß auf diese Weise kein Eingriff in Ablenkung und Intensitätsmodulation der Bilderzeugungseinrichtung erfolgen.

Im laufenden Betrieb (Fig. 3) werden beliebige Bilder so vorkorrigiert erzeugt, daß die kompensierten Fehler auf dem Projektions- bzw. Bildschirm dann nicht mehr auftreten . Das System zur Vorkorrektur wird so in den Signalflußweg integriert, daß die Fehler von Bilderzeugung, Optik und Projektion von vornherein berücksichtigt werden.

## Patentansprüche

1. Verfahren zur Bestimmung und mindestens teilweisen Korrektur der Fehler eines Bildwiedergabesystems, bei dem die wiederzugebenden digitalen Bilddaten auf den Eingang eines neuronalen Netzes gegeben werden, die Korrektur der Fehler durch dieses neuronale Netz erfolgt und die Ausgangswerte des neuronalen Netzes die Eingabewerte des Bildwiedergabesystem bilden, **dadurch gekennzeichnet, dass**
die Daten für jeden der N zu korrigierenden Farbkanäle des Bildwiedergabesystems durch jeweils N unabhängige neuronale Netze verwendet werden, wobei jeder der N² Netze jeweils mit den zu korrigierenden Daten eines Farbkanals gespeist wird, und jeweils die Ergebniswerte der N dazugehörigen
neuronalen Netze addiert die korrigierten Daten der Farbkanäle darstellen, wobei die Parameter der neuronalen Netze in einem vorhergehenden Lernvorgang ermittelt werden, bei dem zur Erzeugung der Lernvorgabe (Target Data) ein Testbild mit vorgebbarer Bildqualität dient.

2. Verfahren nach Anspruch 1, **dadurch gekennzeichnet, dass**
die Ausgangswerte des neuronalen Netzes die Eingangswerte des Bildwiedergabesystems sind.

3. Einrichtung zur Durchführung des Verfahrens nach Anspruch 1 **gekennzeichnet durch**
- einen Bildspeicher, dessen N Farbkanäle mit N neuronalen Netzen verbunden sind, von deren N² Ausgängen jeweils N mit einem von N Addierern verbunden sind, deren Ausgänge an die N Farbkanäle der Bildwiedergabeeinrichtung angeschlossen sind,
- ein auf einem Rechner oder als Schaltung implementierten neuronalen Netz, das aus den genannten N² neuronalen Netzen besteht, bei dem die Werte verschiedener Pixel in einer einlagigen neuronalen Schicht über ortsabhängige Gewichte miteinander verknüpft sind, deren Ausgänge auf die Eingänge des zu korrigierenden Bildwiedergabesystems geschaltet sind,
- eine Bildaufnahmeeinrichtung, die für die Dauer des Lernvorganges direkt oder über mindestens einen Bildspeicher mit dem Eingang des neuronalen Netzes verbunden ist.

## Claims

1. Process for determining and at least partly correcting the faults of an image reproduction system in which the digital image data to be reproduced are applied at the input of a neural network, the faults are corrected by this neural network and the output values of the neural network form the input values of the image reproduction system, **characterised in that**
the data for each of the N colour channels to be corrected of the image reproduction system are used by in each case N independent neural networks, whereby each of the N² networks is fed in each case with the data of a colour channel to be corrected, and the specific resulting values of the N associated neural networks added together represent the corrected data of the colour channels, whereby the parameters of the neural networks are determined in a preceding learning operation, in which a test image with predefinable image quality serves to generate the target data.

2. Process in accordance with claim 1, **characterised in that**
the output values of the neural network are the input values of the image reproduction system.

3. Facility for performing the process in accordance with claim 1 **characterised in that**
- an image memory, whose N colour channels are connected with N neural networks, of whose N² outputs in each case N are linked with one of N adders, whose outputs are connected to the N colour channels of the image reproduction facility,
- a neural network implemented on a computer or as a circuit that consists of the said N² neural networks, in which the values of various pixels are linked together in a single layer neural layer via position- dependent weights, whose outputs are connected to the inputs of the image reproduction system to be corrected,
- an image recording facility that is connected directly or via at least one image memory with the input of the neural network for the duration of the learning operation.

## Revendications

1. Procédé permettant de déterminer et, du moins en partie, de corriger les erreurs d'un système de reproduction d'images, sur lequel les données d'image numériques à reproduire sont transmises à l'entrée d'un réseau neuronal, la correction des erreurs s'opère par le biais de ce réseau neuronal et les valeurs de sortie du réseau neuronal constituent les valeurs d'entrée du système de reproduction d'images, **caractérisé par le fait que**
les données pour chacun des N canaux couleurs à corriger du système de reproduction d'images sont utilisées par les N réseaux neuronaux indépendants respectifs, chacun des N² réseaux étant alimenté avec les données à corriger d'un canal couleur et **par le fait que** les valeurs des résultats des N réseaux neuronaux correspondants ajoutées représentent les données corrigées des canaux couleurs, les paramètres des réseaux neuronaux étant déterminés dans le cadre d'un processus d'apprentissage précédent, utilisant une mire avec une qualité d'image pouvant être prédéfinie pour établir les spécifications d'apprentissage (Target Data).

2. Procédé conformément à la revendication n°1, **caractérisé par le fait que**
les valeurs de sortie du réseau neuronal sont les valeurs d'entrée du système de reproduction d'images.

3. Dispositif permettant la mise en oeuvre du procédé conformément à la revendication n° 1, **caractérisé par le fait que**
- une mémoire d'images, dont les N canaux couleurs sont reliés aux N réseaux neuronaux, depuis lesquels N² sorties, respectivement N, sont reliées à l'un des N additionneurs, dont les sorties sont connectées aux N canaux couleurs du dispositif de reproduction d'images,
- un réseau neuronal mis en oeuvre sur un ordinateur ou sous forme de circuit, composé des N² réseaux neuronaux mentionnés, dans lequel les valeurs de divers pixels dans une monocouche neuronale sont liées par des poids dépendant de l'endroit, dont les sorties sont connectées aux entrées du système de reproduction d'images à corriger,
- un dispositif d'enregistrement d'images qui est connecté à l'entrée du réseau neuronal directement ou au moins par une mémoire d'images pendant la durée du processus d'apprentissage.
